# EUROPÄISCHE PATENTSCHRIFT

(11) **EP 3 606 648 B1**
(45) Veröffentlichungstag und Bekanntmachung des Hinweises auf die Patenterteilung: **01.01.2025**
(21) Anmeldenummer: 18723710.2
(22) Anmeldetag: 06.04.2018
(51) Int. Cl.: B01D 65/02, B01D 61/18, B01D 63/02, B01D 71/02

(54) **THERMISCH STERILISIERBARER FLUIDFILTER UND VERWENDUNG DES THERMISCH STERILISIERBAREN FLUIDFILTERS**
THERMALLY STERILISABLE FLUID FILTER AND USE OF THE SAME
FILTRE À FLUIDE POUVANT ÊTRE STÉRILISÉ THERMIQUEMENT ET UTILISATION DU FILTRE À FLUIDE POUVANT ÊTRE STÉRILISÉ THERMIQUEMENT

(30) Priorität: 07.04.2017 DE 102017003405; 28.09.2017 DE 102017009072
(43) Veröffentlichungstag der Anmeldung: 12.02.2020
(73) Patentinhaber: MANN+HUMMEL GmbH, 71636 Ludwigsburg (DE)
(72) Erfinder: RUPP, Heike, 74366 Kirchheim am Neckar (DE); FASOLD, Michael, 71549 Auenwald (DE); JAINEK, Herbert, 74074 Heilbronn (DE); BAUER, Sascha, 71549 Auenwald (DE); EHLEN, Dr. Frank, 66540 Neunkirchen (DE); KUNZE, Dr. Stefan, 72076 Tübingen (DE); SORG, Jasmin, 71701 Schwieberdingen (DE); MÜNKEL, Karlheinz, 75038 Oberderdingen-Flehingen (DE); SCHÜTZ, Prof. Dr. Steffen, 74321 Bietigheim-Bissingen (DE); DEHNEN, Ulrich, 70806 Kornwestheim (DE)
(74) Vertreter: Mann + Hummel Intellectual Property
(86) Internationale Anmeldenummer: PCT/EP2018/058907
(87) Internationale Veröffentlichungsnummer: WO 2018/185312

(56) Entgegenhaltungen:
- DE-A1- 4 401 014
- US-A1- 2015 136 689
- US-A1- 2016 074 795

## Beschreibung

### Technisches Gebiet

Die Erfindung betrifft einen thermisch sterilisierbaren Fluidfilter zum Aufkonzentrieren von in einem Fluid enthaltenen Stoffen oder Stoffgemischen, insbesondere im Wege einer Mikro-, Nano- oder Ultrafiltration des Fluids.

Solche Fluidfilter finden beispielsweise bei der Aufkonzentrierung und bei der Aufreinigung von pharmazeutischen Vor- oder Zwischenprodukten Verwendung. Die Anwendung ist jedoch nicht hierauf beschränkt; weitere Anwendungen können bei der Herstellung von Life Science Produkten wie Kosmetika oder bei der Verarbeitung von Lebensmitteln liegen.

### Stand der Technik

Um hohe Hygienestandards zu erfüllen, ist es vorgesehen, derartige Fluidfilter häufig thermisch, insbesondere mittels Dampfsterilisation, zu sterilisieren. Durch Temperaturänderungen im Sinne eines definierten Aufheizens und Abkühlens während der thermischen Sterilisation kommt es dabei, beispielsweise im Bereich von Dichtungen oder Klebungen, zu thermisch induzierten Spannungen innerhalb des Fluidfilters. Vor allem bei Filtern, die eine Filterkerze bzw. Filterkartusche aufweisen, die einen von dem Gehäusewerkstoff unterschiedlichen thermischen Ausdehnungskoeffizienten aufweisen, kann es zu einer thermisch induzierten Beschädigung der Filterkartusche kommen, dies ist insbesondere bei Filterkartuschen mit Keramikhohlfasern der Fall; hierbei kann es zu Faserbrüchen kommen. Dadurch weisen bekannte Fluidfilter in der Regel nur eine geringe Lebensdauer auf.

Aus der JP 2003 2511 64 A ist ein Keramikhohlfasermodul bekannt geworden. Das Keramikhohlfasermodulweist regelmäßig angeordnete Ein-/Auslassöffnungen auf, um thermische Spannungen in seinem Filtergehäuse, insbesondere bei der Filtrierung von Gasen, zu reduzieren. Es wird ferner ein Gasdrucktestmodul beschrieben, in dessen Gehäuse zwei O-Ringe angeordnet sind, die das Keramikhohlfasermodul radial umlaufend kontaktieren.

Ferner ist aus der DE 25 13 751 B2 ein Ultrafiltrationsmodul bekannt, das ein in einem Gehäuse aufgenommenes Hohlfaserbündel aufweist, das jeweils endständig mit einem Dichtkopf versehen ist. Das Hohlfaserbündel ist mit seinen Dichtköpfen an beiden Längsenden über einen O-Ring gegenüber dem Gehäuse abgedichtet. Ein derartiges Ultrafiltrationsmodul eignet sich nachteilig weder für Hochtemperaturanwendungen noch zur thermischen Sterilisation; aufgrund der in Längsrichtung starren Abdichtung können bei unterschiedlichen thermischen Ausdehnungen des Gehäuses und des Hohlfaserbündels Beschädigungen der Hohlfasern auftreten.

Ferner ist aus der DE 44 01 014 A1 eine Vorrichtung zum Filtern bekannt, die ein rohrförmiges Gehäuse aufweist, in dem ein vollständig durchquerender rohrförmiger Membrankörper angeordnet ist, dessen beide Enden von jeweils einem Verschlusskörper begrenzt sind. Der Verschlusskörper ist mit einem umlaufenden, eine axiale Bewegung des Membrankörpers gegenüber dem rohrförmigen Gehäuse erlaubenden Dichtungselement beaufschlagt, das den Verschlusskörper gegen das Gehäuse abdichtet.

Aus der US 2016/074795 A1 ist ein Filterelement aus einem für Permeat durchlässigen Material bekannt mit einer Anzahl von Längskanälen, das einen Querschnitt aufweist, der ein Segment einer virtuellen rotationssymmetrischen oder einer spiegelsymmetrischen Fläche ist.

Weitherhin ist aus der US 2015/136689 A1 eine Dichtung für Flüssigkeitsfiltration bekannt, mit einer Dichtungswand, mit einer Endöffnung, die durch eine Innenumfangsfläche an einem zweiten Ende definiert ist, wobei eine Außenumfangsfläche mindestens einen medialen Umfangskanal, eine erste Verjüngung, die sich von einem ersten Ende in Richtung des medialen Umfangskanals verdickt, und eine zweite Verjüngung, die sich von dem zweiten Ende in Richtung des medialen Umfangskanals verdickt, aufweist.

Aufgabe der Erfindung ist es somit, einen gattungsgemäßen Fluidfilter derart zu verbessern, dass dieser für Hochtemperaturanwendungen und/oder zur thermischen Sterilisation geeignet ist.

### Offenbarung der Erfindung

Die erfindungsgemäße Aufgabe wird gelöst durch einen Fluidfilter gemäß Anspruch 1 sowie die Verwendung eines Fluidfilters gemäß Anspruch 15. Die Unteransprüche geben zweckmäßige Weiterbildungen an.

Gelöst wird die Aufgabe somit durch einen Fluidfilter nach Anspruch 1. Darüber hinaus kann das Filtermedium wahlweise ein keramisches Material und/oder ein keramisches Verbundmaterial umfassen.

Aufgrund der vorbeschriebenen Konstruktionsmerkmale eignet sich der Fluidfilter besonders gut dazu, thermisch sterilisiert zu werden; im Rahmen eines Reinigungsprozesses kann jedoch auch eine chemische Reinigungskomponente, v. a. Spülung mit Kalilauge oder Zitronensäure, eingesetzt werden, die darauf abzielt, ein Milieu mit einem niedrigen oder hohen pH-Wert bereitzustellen.

Unter Aufreinigung kann hierbei zweierlei verstanden werden: a) Aufkonzentration eines Wertproduktes innerhalb der Filterkartusche, d. h. im Retentat, oder b) Rückhalten eines Schadprodukts innerhalb der Filterkartusche, d. h. das Wertprodukt liegt im Permeat vor.

Das Fluid kann bei Betriebstemperatur des Fluidfilters im Filterbetrieb vorzugsweise flüssig sein. Das Fluid kann aus einer Trägersubstanz, beispielsweise Wasser, bestehen, in die die aufzureinigenden, insbesondere aufzukonzentrierenden, Stoffe aufgenommen sind. Vorzugsweise kann die Trägersubstanz eine Flüssigkeit sein. Je nach Art der Stoffe kann dann das Fluid insbesondere eine Flüssigkeit, eine Suspension oder eine Emulsion sein. Das Fluid kann beispielsweise mit den aufzureinigenden, insbesondere aufzukonzentrierenden, Stoffen versetztes Wasser sein.

Als in dem Fluid enthaltene Stoffe können insbesondere Reinstoffe oder Stoffgemische mit Ausnahme der Trägersubstanz, beispielsweise ein oder mehrere verschiedene Reinstoffe, vorgesehen sein. Insbesondere können als Stoffe hochmolekulare, beispielsweise mit mehr als 50 kDa, Verbindungen und/oder Gemische aus hochmolekularen Verbindungen, beispielsweise Proteine, genetisches Material, Mikroorganismen und/oder Teile von Mikroorganismen, vorgesehen sein. Es können jedoch durch eine Nanofiltration auch niedermolekulare Verbindungen, wie z. B. bestimmte Zuckerarten, prozessiert werden.

Der Fluidfilter weist einen Fluideinlass auf, in den das zu filtrierende Fluid eingespeist werden kann. Der Fluidfilter kann das eingespeiste Fluid in ein Permeat und ein Retentat trennen. Das Permeat kann über den Permeatauslass abgezogen werden. Das Retentat kann über den Retentatauslass abgezogen werden. Dabei versteht sich unter Retentat die hinsichtlich der Stoffe aufkonzentrierte und unter Permeat die hinsichtlich der Stoffe abkonzentrierte Fraktion des Fluids. Alternativ zu dieser Betriebsweise ist auch eine quasi inverse Betriebsweise möglich: Beispielsweise können im Retentat Zellfragmente zurückgehalten werden, während das molekulare Wertprodukt im Permeat vorliegt.

Die Filterkartusche kann als, vorzugsweise auswechselbarer, Einsatz zum Einbau in das Filtergehäuse ausgebildet sein. Insbesondere umfasst die Filterkartusche das Filtermedium. Das Filtermedium kann zur Filtrierung des Fluids bzw. zur Aufkonzentration im Filterbetrieb vom Fluid durchflossen sein. Das Filtermedium ist aus einem keramischen Material und/oder einem keramischen Verbundmaterial gebildet. Diese Materialien sind insbesondere als Filtermaterialien zur Mikro-, Ultra- und Nanofiltration besonders geeignet. Alternativ hierzu ist es möglich, dass das Filtermedium aus einem Polymer, einem Metall oder einer Metalllegierung besteht oder aufweist.

Der Dichtring ist vorzugsweise gummielastisch verformbar; er kann etwa aus Silikon, Ethylen-Propylen-Dien-Kautschuk (EPDM) bestehen, was hinsichtlich der bei einer Dampfsterilisierung zu erwartenden Temperaturen im Bereich von 135 °C und der Einwirkdauer vorteilhaft ist. Auch sind diese Werkstoffe gegenüber chemischen Reinigungssubstanzen, wie etwa zuvor genannter Zitronensäure und/oder Kalilauge, beständig.

Das axiale Spiel kann an einem oder an beiden Enden in Bezug auf die Filterkartusche vorgesehen sein. Zur Ausbildung des axialen Spiels kann die Filterkartusche vorzugsweise lediglich in ein oder zwei, insbesondere begrenzten, Abschnitten am Filtergehäuse gelagert sein. Durch den Dichtring kann zusätzlich eine zentrische Lagerung der Filterkartusche bzw. Filterkerze ermöglicht werden; diese wird hierdurch in Radialrichtung stabilisiert.

Insbesondere zur Sterilisation kann der Fluidfilter thermisch sterilisiert, vorzugsweise dampfsterilisiert, werden. Erfindungsgemäß werden dabei üblicherweise entstehende mechanische Spannungen, insbesondere thermisch bedingte Spannungen in der Filterkartusche, dadurch vermieden, dass die Filterkartusche mittels des Dichtrings mit axialem Spiel am Filtergehäuse gehalten ist. Mit anderen Worten ist die Filterkartusche zu jedem Zeitpunkt, auch bei Temperaturschwankungen, im Wesentlichen spannungsfrei im Filtergehäuse gehalten. Der Fluidfilter kann somit eine besonders hohe thermische Belastbarkeit aufweisen. Der Fluidfilter kann daher eine besonders hohe Lebensdauer auch bei häufiger thermischer Sterilisation, insbesondere Dampfsterilisation, erreichen.

Durch wenigstens einen der beiden Dichtringe ist ein mit dem Fluid druckbeaufschlagbarer Überdruckbereich des Fluidfilters gegenüber einem Permeatsammelraum des Fluidfilters abgedichtbar, der die Filterkartusche in radialer Richtung außenseitig, bevorzugt ringförmig, umgreift und/oder der die Filterkartusche durchgreift. Der Überdruckbereich kann insbesondere durch den Fluideinlass oder im Bereich des Fluideinlasses gebildet sein. Somit kann ein Strömungskurzschluss, insbesondere zwischen dem Fluideinlass und dem Permeatsammelraum und/oder dem Permeatauslass, innerhalb des Fluidfilters vermieden werden.

Der zumindest eine Dichtring weist eine Dichtlippe auf, die vom Fluid druckproportional zu einem im Überdruckbereich des Fluidfilters herrschenden Betriebsdruck des Fluids, gegen die Filterkartusche pressbar ist. Denkbar ist auch, dassein zweiter oder weiterer Dichtring eine Dichtlippe aufweist, die vom Fluid, insbesondere druckproportional zu einem im Überdruckbereich des Fluidfilters herrschenden Betriebsdruck des Fluids, gegen die Filterkartusche pressbar ist. Insbesondere kann der Dichtring druckproportional dichtend ausgebildet sein. Dadurch kann der Fluidfilter mit hohem Betriebsdruck im Überdruckbereich im Filterbetrieb betrieben werden. Der Anpressdruck der Dichtlippe im Filterbetrieb kann somit verstärkt werden. Dadurch lässt sich sowohl die Dicht- als auch die Haltewirkung des Dichtrings im Filterbetrieb verbessern. Eine thermische Sterilisation, insbesondere eine Dampfsterilisation, kann bei geringerem Betriebsdruck erfolgen. Somit kann der Anpressdruck und/oder die Haltewirkung des Dichtrings während der Sterilisation reduziert werden. Somit können thermisch bedingte Spannungen während der Sterilisation, insbesondere in der Filterkartusche, noch weiter verringert werden. Der Dichtring kann in einer weiteren Ausführungsform auch mehr als eine Dichtlippe aufweisen, beispielsweise eine sich radial nach innen erstreckende Dichtlippe, die an der Filterkartusche anliegt, und eine sich radial nach außen erstreckende Dichtlippe, die an dem Gehäuse dichtend anliegt.

Dazu kann es besonders vorteilhaft sein, den Dichtring, insbesondere den dem Fluideinlass zugeordneten Dichtring, druckproportional dichtend auszubilden. Eine zur Halterung der gesamten Filterkartusche hinreichende Haltewirkung kann durch den anderen Dichtring, auch während der Sterilisation, sichergestellt werden.

Zu dem Dichtring benachbart, insbesondere zu dem Dichtring mit Dichtlippe benachbart, ist ein Haltering radial zwischen dem Filtergehäuse und der Filterkartusche angeordnet. Der Haltering weist über seinen Umfang verteilt eine Mehrzahl Halteausbuchtungen auf, die sich von einem ersten Radius auf einen zweiten Radius erstrecken, wobei der Haltering dazu ausgebildet ist, sich radial innen in einem Haltebereich an einer Außenmantelfläche der Filterkartusche abzustützen und radial außen an dem Filtergehäuse anzuliegen. Die Halteausbuchtungen des Halterings erstrecken sich in einer Ausführungsform von radial außen nach radial innen, sodass sich diese in dem Haltebereich an einer Außenmantelfläche der Filterkartusche abstützen. In einer anderen Ausführungsform kann vorgesehen sein, dass sich die Halteausbuchtungen von radial innen nach radial außen erstrecken, sodass die Halteausbuchtungen an dem Filtergehäuse zur Anlage kommen. Die Erstreckung der Halteausbuchtungen muss jedoch nicht streng radial sein, sondern kann unter einem beliebigen Winkel erfolgen; funktionell wichtig ist lediglich, dass sich diese von dem ersten auf den zweiten Radius erstrecken, wobei der erste Radius je nach Ausführungsform relativ zu dem zweiten Radius wahlweise innen oder außen liegen kann. Es kann zudem vorgesehen sein, dass der Haltering sowohl Halteausbuchtungen hat, die sich nach radial innen erstrecken als auch Halteausnehmungen, die sich nach radial außen erstrecken.

Der Haltering erfüllt die Funktion, die auf die Filterkartusche einwirkenden Lagerungskräfte aufzunehmen, sodass diese nicht bzw. nur in vermindertem Ausmaß in den Dichtring mit Dichtlippe eingeleitet werden. Insbesondere bei einer horizontalen Einbaulage der Filterkartusche besteht ansonsten die Gefahr, dass die Lippendichtung aufgrund des Eigengewichtes der Filterkartusche deformiert wird und somit keine zentrische Ausrichtung der Filterkartusche mehr gegeben ist. Wenn der Spalt zwischen Filtergehäuse und Filterkartusche nicht ausreichend klein ausgeführt ist, kann dies dazu führen, dass eine Undichtigkeit entsteht. Genau dies verhindert der Haltering, indem er die Lagerungskräfte aufnimmt und von der Lippendichtung im Wesentlichen fernhält, sodass durch diese Maßnahme eine nochmals verbesserte Dichtwirkung, auch bei horizontaler Einbaulage, erreicht werden kann.

Kurzum: Der Haltering nimmt Lagerungskräfte auf, um hohe Querkräfte durch Zwangslagen zu vermeiden. Durch die Halteausbuchtungen, die bevorzugt einen nur punktuellen Kontakt bzw. Linienkontakt mit der Filterkartusche haben, wird eine leichte axiale Längsbewegung der Kartusche sichergestellt, was insbesondere aufgrund von unterschiedlichen thermischen Längenausdehnung von Filtergehäuse zur Filterkartusche unter Temperatureinwirkung erforderlich ist, um unerwünschte Axialkrafteinwirkungen auf die Filterkartusche zu vermeiden. Dies ist insbesondere bei Einsatz eines spröden Keramikmaterials als Filtermedium, insbesondere in Form von Hohlfasern, wichtig, um eine thermische Sterilisierbarkeit zu erreichen.

Ferner kann der Haltering aus einem Kunststoffmaterial, insbesondere einem Elastomer, oder Metall ausgebildet sein und/oder die Halteausbuchtungen in Form von Noppen, Nasen oder Zungen, insbesondere Federzungen, ausgebildet sein. Alternativ oder zusätzlich kann vorgesehen sein, dass die Halteausbuchtungen sich nach radial innen bis auf einen Innenumfang erstrecken, dessen Durchmesser in einem unverpressten bzw. unverformten Nichtmontagezustand gleich oder größer ist als ein Durchmesser der Filterkartusche in dem Haltebereich; sodass hierdurch ermöglicht wird, dass der Haltering erst über seine Halteausbuchtungen Kräfte aufnimmt, wenn eine maximal zulässige Verformung der Lippendichtung überschritten ist. Bei einer exakt koaxialen Ausrichtung von Filterkartusche und Dichtring mit Dichtlippe wird daher ein zumindest kleiner Spalt zwischen dem Innenumfang mit den Halteausbuchtungen und dem Haltebereich der Filterkartusche vorliegen. Die Weite dieses Spaltes ist Auslegungssache und hängt von der maximal von dem Dichtring mit Dichtlippe tolerierbaren Verformung ab. Alternativ kann jedoch auch vorgesehen sein, dass die Halteausbuchtungen sich nach radial innen bis auf einen Innenumfang erstrecken, dessen Durchmesser in einem unverpressten bzw. unverformten Nichtmontagezustand kleiner ist als ein Durchmesser der Filterkartusche in dem Haltebereich (Untermaß), sodass eine elastische Vorspannung der Kartusche erreicht wird. Dies hat den Vorteil, dass durch den Haltering auch eine Zentrierfunktion erfüllt wird, sodass die Lippendichtung auch hiervon freigestellt wird.

Der Haltering kann beispielsweise ein O-Ring sein, der über seinen Innenumfang verteilt die Halteausbuchtungen in Form von Noppen hat; dies hat den Vorteil, dass der Haltering genauso einfach hergestellt werden kann wie ein O-Ring mit einfacher Geometrie, da lediglich ein Formwerkzeug hergestellt werden muss und die Fertigung ansonsten in einem Fertigungsschritt möglich ist. Wenn es sich um einen Haltering aus Metall handelt, kann dieser beispielsweise in Form eines Sicherungsrings, wie er für Wellen ohne Umfangsnut verwendet wird, oder als Federring ausgebildet sein. Insbesondere kann der Haltering einen umfänglich durchgängigen hülsenförmigen Abstützbereich aufweisen, mit dem er sich auf dem Haltebereich der Filterkartusche abstützt, ferner sich in Axialrichtung davon radial weg erstreckende Federzungen, die sich zu dem Innenumfang des Filtergehäuses erstrecken. Ein solcher metallischer Haltering bietet den Vorteil, sehr alterungsbeständig zu sein; insbesondere bei einer Ausbildung aus Edelstahl weist dieser eine hervorragende chemische und thermische Beständigkeit auf. In einer bevorzugten Ausführung ist der metallische Haltering geschlitzt, bevorzugt vollständig geschlitzt, sodass dieser einen offenen Querschnitt hat. Dies hat den Vorteil, dass der Haltering einfach und kostengünstig aus einem Bandmaterial hergestellt werden kann, wobei die Ausbuchtungen und/oder Federzungen einfach durch Stanzen und Biegen erhalten werden können.

Gemäß einer besonders bevorzugten Ausführungsform der Erfindung kann vorgesehen sein, dass radial zwischen der Filterkartusche und dem Filtergehäuse in dem Bereich, in dem der Dichtring dichtend an der Filterkartusche anliegt, ein Ringspalt vorliegt, der bevorzugt eine Weite von zumindest 0,4 mm, besonders bevorzugt 0,8 mm, aufweist. Der Spalt kann auch noch weiter sein, bevorzugt etwa mehr als 1,5 mm; je nach Durchmesser der Halteköpfe/Größe der Filterkartusche können sogar noch größere Spaltweiten sinnvoll sein, beispielsweise bis hin zu mehreren Millimetern.

Durch diesen vergleichsweise weiten Spalt wird eine gewisse Verkippung der Filterkartusche im Filtergehäuse gezielt ermöglicht, ohne dass dabei Querkräfte oder Biegemomente auf Filterkartusche, insbesondere auf deren Keramikhohlfaserbündel, einwirken. Dadurch können die im Herstellungsprozess der Filterkartusche auftretenden Toleranzen entsprechend aufgefangen werden.

Ferner kann der Fluidfilter zumindest einen zweiten Dichtring aufweisen, der an der Filterkartusche in radialer Richtung umlaufend dichtend anliegt und über den die Filterkerze am Filtergehäuse gehalten angeordnet ist. Der zweite Dichtring stellt in einer bevorzugten Ausführungsform keine Axialbeweglichkeit bereit und hält die Filterkartusche ortsfest gegenüber dem Filtergehäuse. Bevorzugt ist der zweite Dichtring an einem dem ersten Dichtring abgewandten axialen Ende der Filterkartusche angeordnet und hält die Filterkartusche, insbesondere kraftschlüssig, in einer vorbestimmten Axialposition gegenüber dem Gehäuse; hierzu kann der Dichtring zumindest radial auf eine Mantelfläche der Filterkartusche, insbesondere eine Mantelfläche eines Haltekopfs, gepresst werden.

Alternativ oder zusätzlich dazu kann vorgesehen sein, dass zumindest einer der beiden Dichtringe, bevorzugt beide Dichtringe, ein gummielastisch verformbares Material, insbesondere ein Elastomer, aufweisen. Derartige Dichtringe sind besonders kostengünstig verfügbar.

In einer hierzu alternativen Ausführungsform kann an einem Ende der Filterkartusche (in Längsrichtung gesehen) auf einen Dichtring verzichtet werden und stattdessen der Haltekopf der Filterkartusche mit einem radial ausragenden Bund versehen werden, der dichtend zwischen Deckel und Gehäuse verspannt werden kann. Es ergibt sich somit an diesem axialen Ende eine "Festlagerung". Dies ist besonders vorteilhaft möglich, wenn der Werkstoff des Haltekopfs aus einem ausreichend elastisch verformbaren Material besteht.

Auch kann vorgesehen sein, dass das Filtergehäuse mehrteilig ausgeführt ist und vorzugsweise ein hülsen- oder topfförmiges Gehäuseteil mit einer ersten stirnseitigen Gehäuseöffnung aufweist, wobei vorzugsweise an der Gehäuseöffnung ein Deckel angeordnet ist. Somit können Einzelteile des Filtergehäuses kostengünstig hergestellt und einfach montiert werden. Die Montage kann schrittweise erfolgen, insbesondere kann die Filterkartusche in das Filtergehäuse eingebracht werden. Es kann insbesondere vorgesehen sein, dass wenigstens eines der Einzelteile des Filtergehäuses lösbar mit dem übrigen Filtergehäuse verbunden ist. Dann kann die Filterkartusche auch nachträglich einfach ausgewechselt werden. Das Dichtkonzept ermöglicht zudem die spannungsfreie Einführung bzw. Montage der Filterkartusche in das Filtergehäuse, was insbesondere bei der Verwendung von spröden Werkstoffen wie Keramik als Filtermedium vorteilhaft ist.

Besonders vorteilhaft ist es, wenn das Gehäuseteil hülsenförmig ausgeführt ist und beidenends eine stirnseitige Gehäuseöffnung aufweist, wobei an jeder der beiden Gehäuseöffnungen ein Deckel angeordnet ist. Somit kann zur Montage die Filterkartusche über eine der beiden Gehäuseöffnungen in das Gehäuseteil eingeführt werden. Anschließend kann wenigstens einer der Deckel an der entsprechenden Gehäuseöffnung angeordnet werden.

Besonders vorteilhaft ist es, wenn zumindest einer der beiden Dichtringe abschnittsweise zwischen dem Gehäuseteil und einem der Deckel angeordnet ist und am Deckel sowie am Gehäuseteil in axialer und/oder in radialer Richtung dichtend anliegt. Alternativ oder zusätzlich kann der Haltering zumindest abschnittsweise zwischen dem Gehäuseteil und einem der Deckel angeordnet sein und am Deckel sowie am Gehäuseteil in axialer und/oder in radialer Richtung dichtend anliegen.

Somit kann zumindest einer der beiden Dichtringe und/oder der Haltering auch den Deckel gegen das Gehäuseteil abdichten.

Denkbar ist auch, dass ein dritter Dichtring zwischen dem Gehäuseteil und einem Deckel, vorzugsweise ein dem Fluideinlass zugeordneter Deckel, axial dichtend angeordnet ist. Somit können beispielsweise der die Dichtlippe aufweisende Dichtring die Filterkartusche radial gegen das Gehäuseteil und der dritte Dichtring das Gehäuseteil axial gegen den Deckel abdichten.

Es kann vorgesehen sein, dass wenigstens einer der Dichtringe als O-Ring ausgebildet ist. Insbesondere kann ein dem Retentatauslass zugeordneter Dichtring als O-Ring ausgebildet sein. O-Ringe sind konstruktiv einfach ausgebildet und kostengünstig verfügbar. Der O-Ring kann bezüglich des Gehäuseteils und des Deckels insbesondere so angeordnet sein, dass dieser axial und radial nach innen verpresst wird, wodurch sich eine axiale Festlegung der Filterkartusche gegenüber dem Gehäuseteil ergibt.

Denkbar ist auch, dass die Filterkartusche ein Hohlfaserbündel, insbesondere ein Keramikhohlfaserbündel, umfasst. Ein solches Hohlfaserbündel ist zur Mikro-, Nano- oder Ultrafiltration besonders geeignet. Durch den erfindungsgemäßen Fluidfilter werden thermisch bedingte mechanische Spannungen von vornherein vermieden, sodass auch bei einer ein Keramikhohlfaserbündel aufweisenden Filterkartusche nur ein geringes Bruchrisiko besteht.

Denkbar ist auch, dass das Hohlfaserbündel wenigstens an einem Ende (in Längsrichtung gesehen), bevorzugt an beiden Enden (in Längsrichtung gesehen), an oder in einem Haltekopf fixiert ist. Gemäß dieser Ausführungsform kann insbesondere vorgesehen sein, dass der vorzugsweise gummielastisch verformbare Dichtring an dem Haltekopf in radialer Richtung umlaufend dichtend anliegt und ein zumindest axiales Spiel des Haltekopfs gegenüber dem Filtergehäuse ermöglicht. Wenn es sich um eine Ausführungsform mit Haltering handelt, kann insbesondere vorgesehen sein, dass auch der Haltering an dem Haltekopf anliegt, insbesondere an einer Mantelfläche des Haltekopfs, insbesondere mit seinen Halteausbuchtungen, um die Lagerungskräfte aufzunehmen. Der Haltebereich liegt in diesem Fall an dem Haltekopf vor. Die Halteköpfe werden häufig auch als "Potting" bezeichnet, da diese in der Regel durch Aushärtenlassen eines flüssigen Ausgangsmaterials hergestellt werden.

Dadurch kann das Hohlfaserbündel und somit die Filterkartusche dauerhaft stabil ausgebildet sein. In diesem Fall liegt der, vorzugsweise gummielastisch verformbare, Dichtring auf einer Mantelfläche eines Haltekopfes an. Insbesondere kann der Haltekopf gegenüber dem Dichtring mit Dichtlippe leicht in axialer Richtung verschoben werden, um, wie beschrieben, thermisch induzierte relative Längenänderungen gegenüber dem Gehäuse auszugleichen.

Ein weiterer wesentlicher Aspekt liegt in dem fertigungsbedingten Konzentrizitätsversatz der Keramik-Membrankartusche vom ersten Haltekopf/Potting zum zweiten Haltekopf/Potting auf einer gegenüberliegenden Seite der Filterkartusche. Da die Abdichtung und Lagerung der Filterkartusche, insbesondere bei Einsatz keramischer Hohlfasern, unter Vermeidung von Querkräften/Zwangslagen erfolgen muss, ist die Lippendichtung entsprechend weich auszulegen, was wiederum bedeutet, dass die Lippendichtung ab einem gewissen konzentrischen Versatz bzw. Auslenkung keine Stützfunktion übernehmen kann, ohne dabei Schaden zu nehmen und somit eine Leckage verursacht. Ebendiese radiale Auslenkung der Lippendichtung über ein zulässiges Maximalmaß hinaus wird durch den Haltering vermieden, während die zwingend notwendige Axialbeweglichkeit unvermindert erhalten wird.

Denkbar ist auch, dass wenigstens ein Haltekopf aus einem Kunststoff, insbesondere aus Epoxidharz oder Polyurethan, gebildet ist. Es können jedoch auch Thermoplaste, insbesondere hochtemperaturbeständige Thermoplaste, eingesetzt werden, insbesondere Polyoxymethylen (POM). Der Haltekopf ist durch Einbringen des Hohlfaserbündels in einen schmelzflüssigen Kunststoff und anschließendem Aushärten herstellbar.

Es kann vorgesehen sein, dass wenigstens ein Haltekopf den Permeatsammelraum gegen den Fluideinlass und/oder gegen den Retentatauslass abdichtet. Die Abdichtung kann auch in Zusammenwirkung mit wenigstens einem der Dichtringe erfolgen. Insbesondere kann dazu der Querschnitt des Haltekopfs im Wesentlichen dem des Gehäuseteils bzw. des Deckels, in dessen Bereich sich der Haltekopf befindet, entsprechen.

Es kann vorgesehen sein, dass das Filtergehäuse ganz oder teilweise aus Edelstahl besteht. Edelstahl ist ein für Anwendungen mit hohen Hygienestandards besonders geeignetes Material.

In den Rahmen der Erfindung fällt des Weiteren eine Verwendung eines zuvor beschriebenen Fluidfilters zum Aufkonzentrieren eines pharmazeutischen Vor- und/oder Zwischenprodukts, insbesondere eines Impfstoffs, in einem Fluid. Im Bereich der Impfstoffe kann der Fluidfilter insbesondere zur Aufkonzentrierung von Tierimpfstoffen verwendet werden. Allgemein kann der erfindungsgemäße Fluidfilter besonders vorteilhaft in Bereichen verwendet werden, in denen hohe Hygienestandards zu beachten sind und/oder thermische Sterilisationen, insbesondere häufig, durchgeführt werden. Beispielsweise kann der Fluidfilter auch im Bereich der Lebensmittelverarbeitung eingesetzt werden. Der Fluidfilter weist eine ausgeprägte Belastbarkeit gegenüber thermischen Schwankungen auf. Somit kann der Fluidfilter thermisch sterilisiert werden, insbesondere mittels Dampfsterilisation, ohne dass die Gefahr einer Beschädigung oder sogar Zerstörung der Filterkartusche besteht.

In einer weiteren Variante der erfindungsgemäßen Verwendung kann das Permeat auch wiederverwertet werden. Insbesondere kann das Permeat wieder in einen Produktionsbereich, beispielsweise einen Bioreaktor, in dem das zu filtrierende Fluid produziert wird, zurückgespeist werden. Somit kann ein Verlust von noch im Permeat enthaltenem Vor- oder Zwischenprodukt, hier von Impfstoff, vermieden werden. Im Hinblick auf den weiter oben bereits beschriebenen alternativen Betriebsmodus kann selbstverständlich auch das Retentat entsprechend wiederverwertet werden.

### Kurze Beschreibung der Zeichnungen

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

Es zeigen:
- Fig. 1: einen Fluidfilter in perspektivischer Ansicht von außen;
- Fig. 2: eine Längsschnittansicht des Fluidfilters der Fig. 1;
- Fig. 3: eine Filterkartusche mit einem Hohlfaserbündel in perspektivischer Ansicht;
- Fign. 4 und 5: Detailansichten der Endbereiche des Fluidfilters der Fig. 1 im Längsschnitt;
- Fig. 6: eine schematisierte Darstellung einer Verwendung eines Fluidfilters;
- Fig. 7: eine Längsschnittansicht einer weiteren Ausführungsform des Fluidfilters mit Halteringen;
- Fig. 8: eine isometrische Ansicht einer Filterkartusche gemäß der weiteren Ausführungsform des Fluidfilters;
- Fig. 9: eine Seitenansicht des Fluidfilters gemäß der weiteren Ausführungsform;
- Fig. 10: eine isometrische Ansicht einer Filterkartusche gemäß noch einer weiteren Ausführungsform des Fluidfilters;
- Fig. 11: ein Detail einer Längsschnittansicht eines Fluidfilters gemäß noch einer weiteren Ausführungsform;
- Fig. 12: Querschnittsansicht B-B gemäß Fig. 11; und
- Fign. 13 bis 17: Ausführungsbeispiele für als Federringe ausgebildete Halteringe gemäß einer noch weiteren Ausführungsform des Fluidfilters.

### Ausführungsform(en) der Erfindung

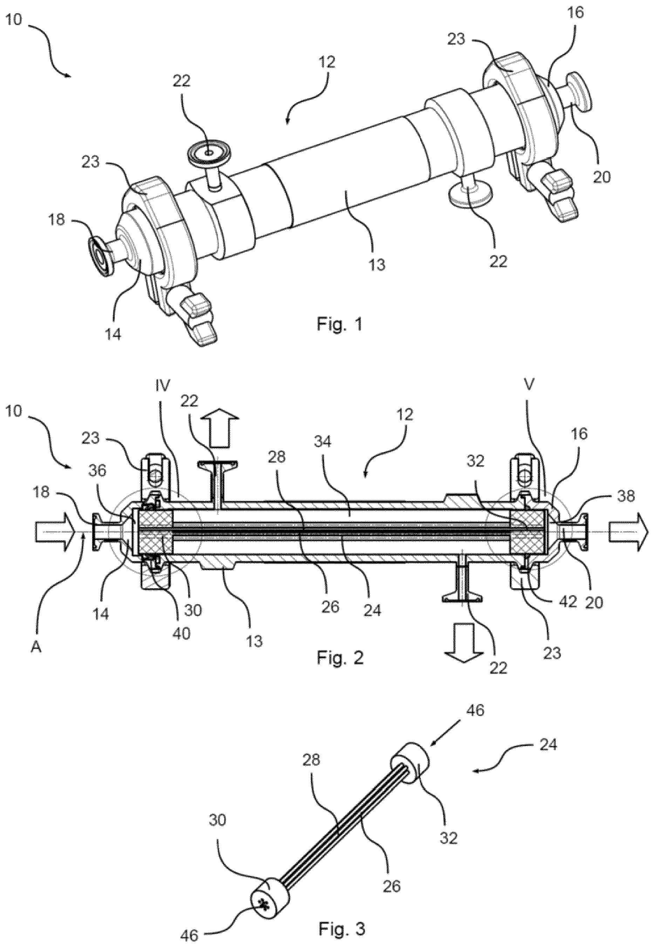

Fig. **1** zeigt einen Fluidfilter **10** in perspektivischer Ansicht. Der Fluidfilter 10 weist ein mehrteiliges Filtergehäuse **12** mit einem hülsenförmigen Gehäuserohr **13** auf. An dessen stirnseitigen Gehäuseöffnungen sind jeweils ein Einlassdeckel **14** bzw. ein Retentatdeckel **16** angeordnet. Der Einlassdeckel 14 weist einen stutzenförmig ausgebildeten Fluideinlass **18** auf. Der Retentatdeckel 16 weist einen Retentatauslass **20** auf, der ebenfalls stutzenförmig ausgebildet ist. Am Gehäuserohr 13 liegen zwei Permeatauslässe **22** vor, die in der gezeigten Ausführungsform angeschweißt sind. Auch die Permeatauslässe 22 sind stutzenförmig ausgebildet.

Zur Befestigung des Fluidfilters 10 ist zumindest eine Schelle **23,** vorzugsweise mehrere Schellen 23, vorgesehen. Die Schelle(n) 23 umgreift bzw. umgreifen das Filtergehäuse 12. Ihr Durchmesser ist derart bemessen, dass der Fluidfilter 10 im Wesentlichen spannungsfrei in der bzw. den Schellen 23 festgelegt werden kann. Zudem erfüllen die Schellen 23 die Aufgabe, die Deckel 14, 16 in axialer Richtung auf das Gehäuserohr 13 zu pressen; dies wird durch eine innenliegende, axial beiderseitig kegelige bzw. angefaste umlaufende Nut auf der inneren Mantelfläche der Schellen 23 erreicht, wodurch bei einem Anziehen der Schellen 23 eine Axialpressung erzeugt werden kann.

In diesem Ausführungsbeispiel sind das Gehäuserohr 13 sowie die Deckel 14, 16 aus Edelstahl. Ferner können auch der Fluideinlass 18, der Fluidauslass 20, die Permeatauslässe 22 und/oder die Schellen 23 aus Edelstahl gebildet sein.

Fig. 2 zeigt den Fluidfilter 10 der Fig. 1 im Längsschnitt. Zu erkennen ist zunächst, dass das Filtergehäuse 12 mit dem Gehäuserohr 13 und den Deckeln 14, 16 einen Innenraum ausbildet.

Der Fluidfilter 10 ist länglich gestaltet und weist eine eine axiale Richtung definierende Längsachse A auf.

In dem Innenraum ist eine Filterkartusche **24** angeordnet. Die Filterkartusche 24 umfasst zwei Halteköpfe **30, 32,** zwischen denen ein Filtermedium **26** fixiert ist. Das Filtermedium 26 weist ein Hohlfaserbündel **28** auf. Das Hohlfaserbündel 28 umfasst ein keramisches Material und ist insbesondere als Keramikhohlfaserbündel ausgebildet.

Zwischen den beiden Halteköpfen 30, 32 und dem Gehäuserohr 13 ist ein Permeatsammelraum **34** ausgebildet. Der Permeatsammelraum 34 ist fluidisch mit den Permeatauslässen 22 verbunden. In diesem Ausführungsbeispiel umgreift und durchgreift der Permeatsammelraum 34 die Filterkartusche 24 bzw. das Filtermedium 26 im Bereich des Hohlfaserbündels 28. In einer alternativen Ausführungsform, insbesondere wenn das Filtermedium 26 als Volumenkörper ausgebildet ist, umgreift der Permeatsammelraum 34 das Filtermedium 26 in radialer Richtung außenseitig und beispielsweise ringförmig umlaufend.

Zu erkennen ist ferner, dass der Fluidfilter 10 im Bereich des Fluideinlasses 18 einen Fluideinlassbereich **36** aufweist. Im Bereich des Retentatauslasses 20 weist der Fluidfilter 10 einen Retentatauslassbereich **38** auf. In den Bereichen 36, 38 sammelt sich das durch den Fluideinlass 18 eintretende Fluid bzw. das Retentat.

Zu erkennen ist, dass die beiden Halteköpfe 30, 32 den Permeatsammelraum 34 von dem Fluideinlassbereich 36 und dem Fluideinlass 18 sowie von dem Retentatauslassbereich 38 und dem Retentatauslass 20 abtrennen. Dazu sind die Halteköpfe 30, 32 querschnittsausfüllend im Filtergehäuse 12 angeordnet.

Somit kann im Filterbetrieb ein zu filterndes Fluid über den Fluideinlass 18 in den Fluidfilter 10 eintreten. Über den Fluideinlassbereich 36 und den Haltekopf 30 gelangt das Fluid in das Hohlfaserbündel 28. Dort wird das Fluid aufgrund der Filtereigenschaften des Hohlfaserbündels 28 in ein Permeat und ein Retentat aufgeteilt. Das Permeat tritt wandseitig aus den Hohlfasern des Hohlfaserbündels 28 aus und gelangt somit in den Permeatsammelraum 34. Über die Permeatauslässe 22 kann dann das Permeat abgeführt werden.

Dagegen durchfließt das Retentat über die Länge des Hohlfaserbündels 28 hinweg die Filterkartusche 24, bis es am Haltekopf 32 in den Retentatauslassbereich 38 ein- und dort über den Retentatauslass 20 austritt.

Da aus dem Fluid das Permeat auf diese Weise abgetrennt wird, ist das Retentat beispielsweise gegenüber dem anfänglichen Fluid aufkonzentriert. Im Filterbetrieb kann dazu der Fluidfilter 10 bzw. der Fluideinlass 18 mit einem Überdruck, beispielsweise im Bereich von 4 bis 8 bar, beaufschlagt werden.

Zur Sterilisation wird der Fluideinlass 18 mit Heißdampf beaufschlagt. Dabei kann der Druck des Heißdampfes geringer gehalten werden als der Betriebsdruck im Filterbetrieb. Der Dampf kann trotz geringeren Druckes den gesamten Fluidfilter 10 und insbesondere die Filterkartusche 24 vollständig durchsetzen bzw. vollständig durch diese zur Sterilisation hindurchfließen. Der Heißdampf kann alternativ oder zusätzlich durch einen oder beide der Permeatauslässe 22 und/oder den Fluidauslass 20 zu oder abgeführt werden.

In diesem Ausführungsbeispiel der Erfindung ist die Filterkartusche 24 ganz oder - vorzugsweise - teilweise mit axialem Spiel entlang der Längsachse A im Filtergehäuse 12 angeordnet.

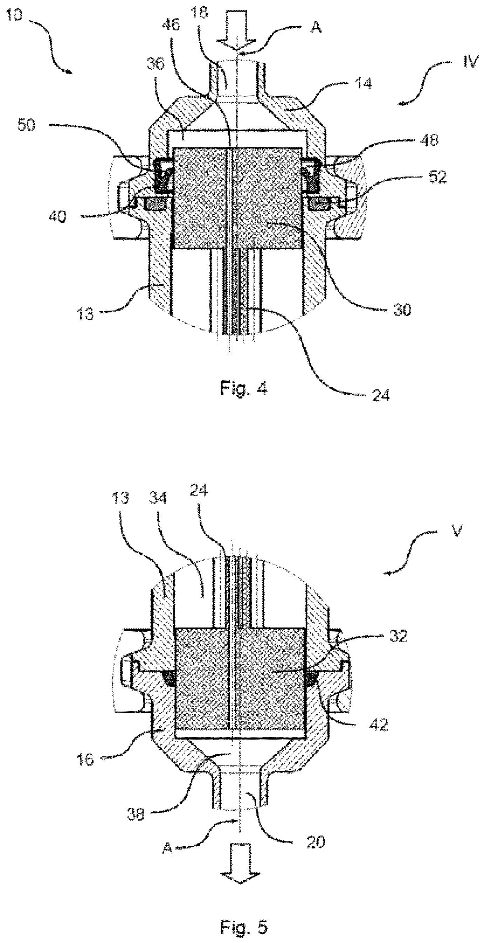

Dazu ist - wie noch näher in den Figuren 4 und 5 beschrieben wird - die Filterkartusche 12 an ihrem Haltekopf 32 im Wesentlichen durch einen retentatauslassseitig angeordneten Dichtring **42** festgelagert. Diese Festlagerung wird durch eine Anordnung des Dichtrings 42 in einer im Wesentlichen konischen bzw. angefasten Dichtnut seitens des Deckels 16 erreicht, was beim Zusammenfügen der Gehäuseteile 13, 16 zu einer axialradialen Verpressung des Dichtrings 42 und damit zu einer axialen Festlegung der Filterkartusche 24 gegenüber dem Gehäuse 12 führt. An einem fluideinlassseitig angeordneten Dichtring **40** ist die Filterkartusche 24 dagegen losgelagert, d. h. mit signifikantem axialen Spiel gelagert. Kommt es somit zu einer Längenausdehnung aufgrund beispielsweise einer Temperaturveränderung der Filterkartusche 24, so kann sich der Haltekopf 30 entlang der Längsachse A verlagern. Das dabei der Filterkartusche 24 zur Verfügung stehende axiale Spiel ist dazu so bemessen, dass selbst bei höchstzugelassener Betriebstemperatur der Haltekopf 30 frei beweglich bleibt.

Somit ist sichergestellt, dass die Filterkartusche 24 zu jedem Zeitpunkt keinen bzw. im Wesentlichen keinen mechanischen, insbesondere temperaturbedingten, Spannungen ausgesetzt ist. Selbst wenn das - keramische - Filtermedium 26 eine besonders hohe Brüchigkeit aufweist, wird ein Bruch durch das axiale Spiel sicher vermieden.

Fig. 3 zeigt die Filterkartusche 24 in perspektivischer Darstellung. Zu erkennen ist wiederum das Hohlfaserbündel 28, das endseitig jeweils durch die Halteköpfe 30, 32 begrenzt ist. In diesem Ausführungsbeispiel weist das Hohlfaserbündel 28 neun keramische Hohlfasern auf. Diese treten an Durchgangsöffnungen 46 durch die Halteköpfe 30 bzw. 32 hindurch.

In diesem Ausführungsbeispiel sind die radialen Außenseiten der Halteköpfe 30, 32 als Dichtflächen ausgebildet. Insbesondere sind in diesem Ausführungsbeispiel die Außenseiten mit einem zusätzlichen Dichtmaterial ausgestattet.

Die Halteköpfe 30, 32 sind aus Kunststoff, insbesondere Epoxidharz, gebildet. Insbesondere sind die Halteköpfe 30, 32 hergestellt, indem das Hohlfaserbündel 28 in den Kunststoff eingebettet, insbesondere eingegossen, ist und nach dem Aushärten die Seitenflächen der Halteköpfe 30, 32 beschnitten sind. Die Halteköpfe 30, 32 können alternativ auch eine sogenannte Pottschale aufweisen, d. h. eine hülsenförmige Ummantelung eines Haltekopf-Kerns, die beispielsweise aus Polyetheretherketon (PEEK) oder einem anderen hinsichtlich der thermischen Ausdehnungskoeffizienten mit dem Kern-Material kompatiblen Material bestehen kann.

Fig. **4** zeigt eine Detailansicht des Fluidfilters 10 gemäß dem Ausschnitt **IV** der Fig. 2 im Längsschnitt. Zu beachten ist die Ausdehnung des Fluideinlassbereichs 36 entlang der Längsachse A. Diese ist derart gewählt, dass entsprechend einer höchstzulässigen Betriebstemperatur hinreichend Raum für ein axiales Spiel der Filterkartusche 24 bzw. des Haltekopfs 30 besteht.

Zu erkennen ist, dass der Dichtring 40 in einer Ausnehmung **48** des Deckels 14 sitzt. Er liegt an der Filterkartusche 24 und insbesondere am Haltekopf 30 radial umlaufend und diese abdichtend an.

Der Dichtring 40 ist als druckproportionale Dichtung ausgebildet und weist eine radial nach innen weisende Dichtlippe **50** auf, mit der er am Haltekopf 30 anliegt. In diesem Ausführungsbeispiel entspricht der Fluideinlassbereich 36 einem Überdruckbereich des Fluidfilters 10. Wird nun der Überdruckbereich mit unter Druck, insbesondere Hochdruck, stehendem, zu filterndem Fluid beaufschlagt, wird die Dichtlippe 50 im Wesentlichen druckproportional zum Druck des Fluids gegen die Filterkartusche 24 und hier insbesondere gegen den Haltekopf 30 gepresst. Somit ergibt sich eine druckproportionale Dichtung. Der Dichtring kann in einer nicht figurativ gezeigten Ausführungsform auch mehr als eine Dichtlippe 50 aufweisen, beispielsweise eine sich radial nach innen erstreckende Dichtlippe 50, die an der Filterkartusche anliegt, und eine sich radial nach außen erstreckende Dichtlippe, die an dem Gehäuse dichtend anliegt. In dieser Ausführungsform können beide Dichtlippen, die in einem unverpressten Nichtmontagezustand V-förmig abstehende Schenkel des Dichtrings bilden, auch die gleiche Länge aufweisen. Der Winkel der V-förmig abstehenden Schenkel, die jeweils eine Dichtlippe bilden, kann dabei auch gleich sein.

Durch Ausbildung des Dichtrings 40 mit einer Dichtlippe 50 ist seine Kontaktfläche am Haltekopf 30 vergleichsweise gering. Dadurch bildet der Dichtring 40 auch eine radiale Loslagerung für die Filterkartusche 24 bzw. für den Haltekopf 30; vorwiegend soll die Lippendichtung 40 jedoch relative Axialbewegungen kompensieren. Insbesondere ist die Filterkartusche 24 axial entlang der Längsachse A mit ihrem fluideinlassseitigen Ende bzw. dem Haltekopf 30 innerhalb des Fluideinlasses 36 verlagerbar.

In Fig. 4 zu erkennen ist des Weiteren ein dritter Dichtring **52.** Der dritte Dichtring 52 ist in Form eines O-Rings ausgebildet. Der dritte Dichtring 52 ist zwischen dem Gehäuserohr 13 und dem Einlassdeckel 14 axial dichtend angeordnet. Er sitzt in einer Ausnehmung des Gehäuserohrs 13.

Der Dichtring 40 sowie der dritte Dichtring 52 sind aus gummielastisch verformbarem Material, insbesondere einem Elastomer, gebildet.

Fig. **5** zeigt eine der Fig. 4 entsprechende Detailansicht des Retentatauslassbereichs 38 bzw. der Markierung V der Fig. 2 im Längsschnitt. Zu erkennen ist der retentatauslassseitig angeordnete Haltekopf 32, der von dem Gehäuserohr 13 und dem Retentatdeckel 16 radial umfasst wird. Kopfseitig des Haltekopfs 32 befindet sich der Retentatsauslassbereich 38 mit dem Retentatauslass 20.

Mittels des Haltekopfs 32 und des Dichtrings 42 ist der Permeatsammelraum 34 auch gegenüber dem Retentatauslassbereich 38 abgedichtet.

Im Gegensatz zu dem Dichtring 40 kontaktiert jedoch der retentatauslassseitige Dichtring 42 sowohl das Gehäuserohr 13 als auch den Retentatdeckel 16 und den Haltekopf 32 der Filterkartusche 24. Durch seinen Presssitz dichtet der Dichtring 42 dabei sowohl radial den Haltekopf 32 bzw. die Filterkartusche 24 umlaufend gegen den Deckel 16. Zudem dichtet der Dichtring 42 axial den Deckel 16 gegen das Gehäuserohr 13.

In diesem Ausführungsbeispiel ist auch der Dichtring 42 als O-Ring ausgebildet. Er ist ebenfalls aus gummielastischem Material, insbesondere einem Elastomer, gebildet. Er sitzt in einer Ausnehmung des Retentatauslass-Deckels 16. Zur dichtenden Pressung des Haltekopfs 32 ist der Anpressdruck des Dichtrings 42 derart gewählt, dass die Filterkartusche 24 auch im Falle eines niedrigen Betriebsdrucks im Überdruckbereich bzw. dem Fluideinlassbereich 36 (Fig. 2) im Wesentlichen ortsfest festgelegt ist. Somit bildet der Dichtring 42 eine Festlagerung. Zusammen mit dem Dichtring 40 (Fig. 2) ergibt sich somit eine einer Fest-/Loslagerung entsprechende Lagerung der Filterkartusche 24 am Filtergehäuse 12 (Fig. 1).

Bei einer alternativen Ausführungsform ist vorgesehen, dass der Dichtring 40 oder der Dichtring 42 in einer Ausnehmung des ihnen jeweils nächstliegenden Haltekopfes 30, 32 oder einer Ausnehmung des Gehäuserohrs 13 anstatt in den Deckeln 14, 16 sitzen.

Zur Montage des Fluidfilters 10 (siehe auch Figuren 1 und 2) genügt es, nacheinander, insbesondere reversibel lösbar, alle Einzelteile an- bzw. ineinander zu fügen. Dazu wird zunächst die Filterkartusche 24 in das Gehäuserohr 13 eingeschoben. Anschließend wird der dritte Dichtring 52 seitlich in das Gehäuserohr 13 eingelegt. Ausgestattet mit den Dichtringen 40, 42 werden dann die Deckel 14, 16 stirnseitig am Gehäuserohr 13 montiert, beispielsweise unter Verwendung der Schellen 23 angeflanscht. Der Fluideinlass 18, der Retentatauslass 20 und die Permeatauslässe 22 sowie die Schellen 23 werden abschließend am übrigen Filtergehäuse 12 außenseitig angebracht.

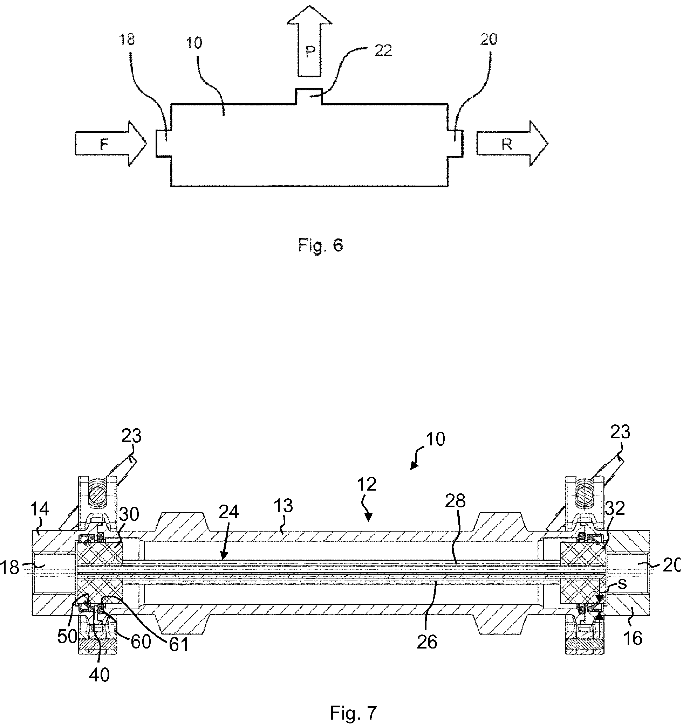

Eine schematische Abbildung einer Verwendung des erfindungsgemäßen Fluidfilters 10, beispielsweise zum Aufkonzentrieren eines pharmazeutischen Vor- und/oder Zwischenprodukts in einem Fluid, beispielsweise eines Impfstoffs in einem Impfstofffluid, ist in Fig. **6** dargestellt. Selbstverständlich ist die Anwendung jedoch nicht hierauf beschränkt; weitere Anwendungen können bei der Herstellung von Life Science Produkten wie Kosmetika oder bei der Verarbeitung von Lebensmitteln liegen.

Für dieses Beispiel wird angenommen, dass es sich bei dem zu filtrierenden Fluid um ein aufzukonzentrierendes, wässriges Impfstoffgemisch handelt. Mit anderen Worten ist in diesem Ausführungsbeispiel die Trägersubstanz Wasser.

Die Fig. 6 zeigt dazu eine schematische Darstellung des Fluidfilters 10 mit seinem Fluideinlass 18, dem Retentatauslass 20 sowie den in dieser schematischen Darstellung zusammengefassten Permeatauslässen 22.

Im Filterbetrieb wird der Fluideinlass 18 des Fluidfilters 10 mit einem zu filternden Fluid F beaufschlagt. Zur Erreichung eines optimalen Filterergebnisses steht das Fluid F dabei unter Überdruck, beispielsweise 5 bar.

Das Fluid F wird in der Filterkartusche 24 (Fig. 1) und insbesondere in deren Hohlfilterbündel 28 (Fig. 1) in ein Permeat P und ein Retentat R aufgeteilt. Dabei tritt das Permeat zunächst durch Wände der Hohlfasern des Hohlfaserbündels 28. Das Permeat P sammelt sich zunächst im Permeatsammelraum 24 (Fig. 1), bevor es den Fluidfilter 10 über den Permeatauslass 22 verlässt. Durch die Filtrierung des zu filternden Fluids F ist das Permeat P an Impfstoff abgereichert und weist dagegen einen gesteigerten Gehalt an Trägersubstanz, hier Wasser, auf.

Das Retentat R wird dagegen innerhalb der Filterkartusche 24 aufkonzentriert und verlässt den Fluidfilter 10 über den Retentatauslass 20.

Zur thermischen Sterilisation wird im Sterilisationsmodus anstelle des zu filtrierenden Fluids F Wasserdampf in den Fluideinlass 18 eingeleitet. Der Druck des Dampfes ist dazu in diesem Ausführungsbeispiel geringer gewählt als der Druck bzw. Überdruck des zu filtrierenden Fluids F im Filtermodus. Während der Sterilisation gelangen ein Teil des Wasserdampfes über die Filterkartusche 24 bis zum Permeatauslass 22 und ein anderer Teil bis zum Retentatauslass 20. Somit wird der Fluidfilter 10 in allen seinen Teilbereichen durch den Wasserdampf sterilisiert.

Unter Vornahme einer Zusammenschau aller Figuren der Zeichnung betrifft die Erfindung zusammenfassend in einem Ausführungsbeispiel einen thermisch sterilisierbaren, insbesondere dampfsterilisierbaren, Fluidfilter 10. Der Fluidfilter 10 eignet sich insbesondere zum Aufkonzentrieren von Stoffen bzw. Stoffgemischen, beispielsweise pharmazeutischen Vor- und/oder Zwischenprodukten, insbesondere Impfstoffen, in einem Fluid F. Als Produkte ergeben sich somit ein Retentat R mit erhöhter Konzentration der Stoffe bzw. Stoffgemische sowie ein hinsichtlich der Stoffe bzw. Stoffgemische abgereichertes Permeat P. Der Fluidfilter 10 weist eine besonders hohe Lebensdauer, selbst bei häufiger Sterilisation auf. Insbesondere wird daher eine Verwendung des Fluidfilters zum Aufkonzentrieren pharmazeutischer Vor- und/oder Zwischenprodukte, insbesondere von Impfstoffen vorgeschlagen. Das wird erreicht, indem mechanische Spannungen, insbesondere thermisch bedingte Spannungen beispielsweise an bzw. in einer Filterkartusche 12 des Fluidfilters 10 schon konstruktiv vermieden oder zumindest verringert werden.

Der Fluidfilter 10 weist dazu ein Filtergehäuse 12 mit einem Einlassdeckel 14 und einem Retentatauslassdeckel 16 und einem zwischen den Deckeln 14, 16 angeordneten Gehäuserohr 13 auf. Der Fluidfilter 10 weist einen Fluideinlass 18 mit einem Fluideinlassbereich 36, einen Retentatauslass 20 mit einem Retentatauslassbereich 38 sowie ein oder mehrere Permeatauslässe 22, die mit einem Permeatsammelraum 34 fluidisch verbunden sind, auf.

Das Filtergehäuse 12 bildet einen Innenraum aus, in dem die Filterkartusche 24, insbesondere zentrisch entlang einer Längsachse A des Filtergehäuses 12, angeordnet ist. Die Filterkartusche 24 umfasst ein Filtermedium 26, das durch zwei aus Kunststoff gebildete Halteköpfe 30, 32 begrenzt wird, in und zwischen denen ein Hohlfaserbündel 28, in diesem Ausführungsbeispiel ein Keramikhohlfaserbündel, angeordnet ist. Das Hohlfaserbündel 28 bildet dabei Durchgangsöffnungen 46 in den Halteköpfen 30, 32 aus.

In den Deckeln 14, 16 sind als O-Ringe ausgebildete Dichtringe 40, 42 angeordnet. Insbesondere sitzt der Dichtring 40 in einer Ausnehmung 48 des Einlassdeckels 14. Der mit einer innenseitigen Dichtlippe 50 versehene Dichtring 40 dichtet den Haltekopf 30 radial gegen das Filtergehäuse 12, insbesondere druckunterstützt, ab. Dagegen dichtet der Dichtring 42 sowohl radial den ihm zugeordneten Haltekopf 32 gegen den Deckel 16 als auch den Deckel 16 axial gegen das Gehäuserohr 13 ab. Ein dritter Dichtring 52 sorgt für eine Abdichtung des gegenüberliegenden Einlassdeckels 14 gegen das Gehäuserohr 13.

Insgesamt bilden die Dichtringe 40, 42 eine Art einer Fest-/Loslagerung der Filterkartusche 24 in dem Filtergehäuse 12, sodass die Filterkartusche 24 ein axiales Spiel zum Ausgleich thermisch bedingter Längenveränderungen erhält.

Alternativ zu der/dem in Fig. 6 gezeigten Durchströmungsvariante/Betriebsmodus kann mit dem erfindungsgemäßen Fluidfilter selbstverständlich auch eine sogenannte Dead-End-Filtration durchgeführt werden: Hierzu wäre die Filterkartusche, insbesondere die Keramikhohlfasern, an einem dem Fluideinlass abgewandten Ende verschlossen, sodass innerhalb der Filterkartusche entweder ein Wert- oder Schadprodukt zurückgehalten würde. Hinsichtlich des Permeatauslasses unterscheidet sich diese zusätzliche Ausführungsform jedoch nicht; der wesentliche Unterschied besteht darin, dass kein Fluidauslass (Retentatauslass) vorgesehen sein muss.

In Fig. **7** ist ein Fluidfilter 10 gemäß einer weiteren Ausführungsform gezeigt. Funktionell unterscheidet sich dieser nicht von den vorbeschriebenen Varianten. Deutliche Unterschiede bestehen jedoch hinsichtlich Lagerung/Abdichtung der Filterkartusche 24 gegenüber dem Filtergehäuse 12. Hier ist zwischen dem Filtergehäuse 12 (genauer sowohl zwischen dem Gehäuserohr 13 als auch den Deckeln 14, 16) und den Halteköpfen 30, 32 der Filterkartusche 24 ein Radialspalt vorhanden, der die Weite s aufweist. Über diesen vergleichsweise weiten Spalt s können Fertigungstoleranzen der Filterkartusche 24 hinsichtlich Achsversatz/Konzentrizität ausgeglichen werden, ohne dass eine Verspannung/Zwangslage droht. Ferner können auch Winkelabweichungen problemlos ausgeglichen werden; die Filterkartusche weist in diesem Fall eine leicht verkippte Einbaulage auf. Dies ist insbesondere bei Einsatz von keramischen Hohlfaserbündeln 28 als Filtermedium 26 wichtig.

Um insbesondere bei einer horizontalen Einbaulage zu verhindern, dass auf die Dichtlippe 50 des Dichtrings 40 zu starke Lagerungskräfte einwirken, die auf Dauer dazu führen können, dass keine wirksame Abdichtung mehr gegeben ist, ist beiderends ein Haltering 60 vorgesehen, der über seinen Umfang verteilt eine Mehrzahl sich nach radial innen erstreckender Halteausbuchtungen 61 aufweist, die sich ihrerseits auf einem Halterbereich auf der Mantelfläche der Halteköpfe 30, 32 abstützen.

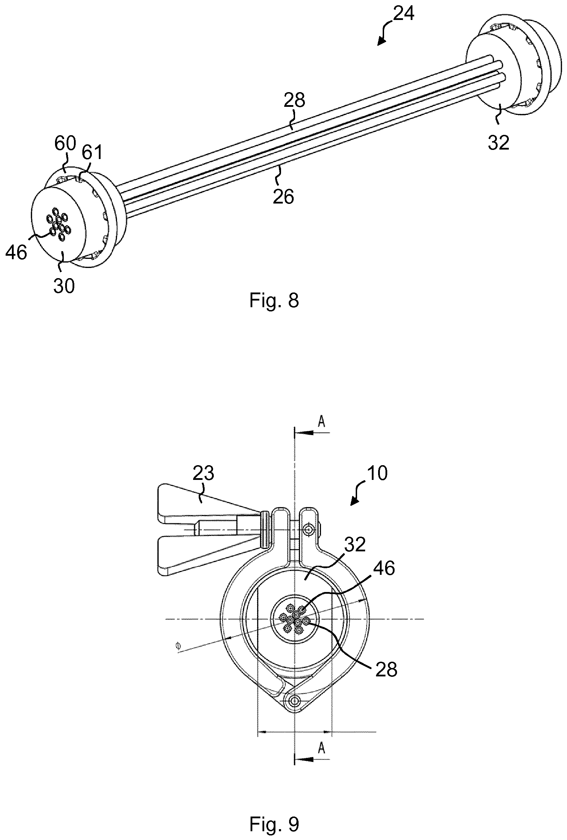

Bei dem Haltering 60 kann es sich wahlweise um einen O-Ring aus einem Kunststoffmaterial, z. B. einem Elastomer, handeln, wobei die Halteausbuchtungen 61 als Noppen ausgebildet sind. Dies ist in Fig. **8** dargestellt. Durch den lediglich punkt-/linienförmigen Kontakt bzw. die sehr kleine Kontaktfläche zwischen Halteausbuchtungen 61 und Haltekopf 30, 32 wird erreicht, dass sich die Halteköpfe 30, 32 trotz der radialen Führung relativ reibungsarm axial verschieben lassen; dies ist wichtig, um relative Längenausdehnungen zwischen Filterkartusche 24 und Filtergehäuse 12, insbesondere beim thermischen Sterilisieren, kompensieren zu können.

Fig. **9** zeigt eine Seitenansicht des Fluidfilters aus Fig. 7. Es ist hierbei die Schelle 23 zu erkennen, die den Deckel 14 mit dem Gehäuserohr 13 verbindet, die in diesem Ausführungsbeispiel durch eine Flügelmutter verschließbar ist. Ferner sind die Durchgangsöffnungen 46 des Hohlfaserbündels 28 durch den Haltekopf 32 zu erkennen.

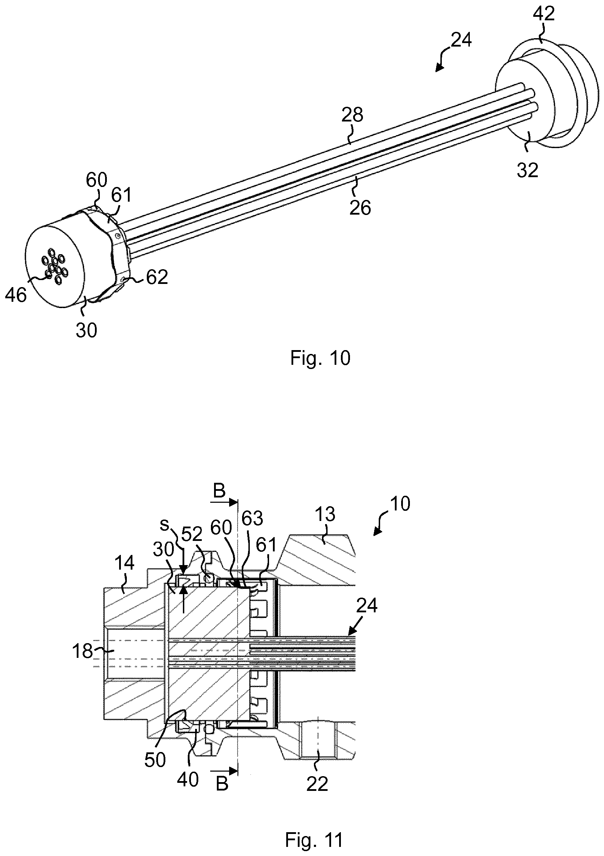

In Fig. **10** ist eine Filterkartusche 24 eines Fluidfilters gemäß einer weiteren Ausführungsform gezeigt. Die Filterkartusche 24 an sich entspricht in ihrem Aufbau den vorbeschriebenen Varianten. Ein Unterschied gegenüber Fig. 7 besteht hinsichtlich der Ausbildung des Halterings 60, der hier ein Federring aus einem bevorzugt metallischen Werkstoff, insbesondere Edelstahl, ist. Die Halteausbuchtungen 61 sind in Form von nach radial innen gerichteten konkaven Auswölbungen ausgebildet. Die Auswölbungen sind bevorzugt in einem regelmäßigen Abstand über den Umfang verteilt, wobei jeweils zwischen zwei umfangsmäßig benachbarten konkaven Auswölbungen unausgewölbte Verbindungsabschnitte vorgesehen sind, in denen jeweils ein nach radial außen gerichteter Abstützstift 62 angeordnet ist, der seinerseits einen möglichst kleinflächigen Kontakt zur Innenmantelfläche des Filtergehäuses erlaubt.

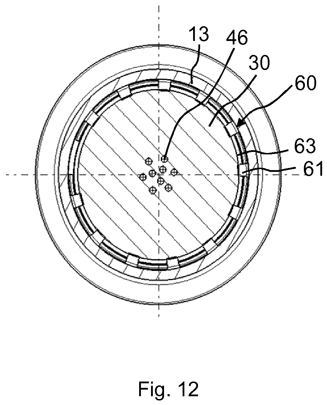

Der Ausschnitt eines Längsschnitts eines Fluidfilters 24, der in Fig. **11** gezeigt ist, unterscheidet sich wiederum in der Ausbildung des Halterings 60 von den vorbeschriebenen Varianten. Der Haltering 60 weist vorliegend einen radial innenliegenden, durchgängigen, umlaufenden, hülsenförmigen Abstützbereich 63 auf, der sich in einem Haltebereich des Haltekopfs 30 abstützt. Ferner hat der Haltering Federzungen, die die Halteausbuchtungen 61 bilden und die sich von dem Abstützbereich beidseitig in Axialrichtung und nach radial innen erstrecken und zur Anlage an der Innenmantelfläche des Filtergehäuses 12, insbesondere des Gehäuserohrs 13, ausgebildet sind. Die Wirkungsweise des Dichtrings 40 mit Dichtlippe 50 unterscheidet sich hierbei genauso wenig von den vorbeschriebenen Varianten wie die Wirkung des Dichtrings 52, der seinerseits den Deckel 14 gegenüber dem Gehäuserohr 13 axial abdichtet. Hierzu wird ferner auf die Fig. **12** verwiesen, die den Schnitt B-B gemäß Fig. 11 zeigt.

Durch alle hierin beschriebenen Varianten des Halterings wird (insbesondere in Zusammenwirkung mit dem Spalt s) vorteilhafterweise einerseits erreicht, dass fertigungsbedingte Lagetoleranzen hinsichtlich Konzentrizität, Parallelität und Winkligkeit der beiden Halteköpfe 30, 32 der Filterkartusche zueinander ausgeglichen werden können ohne dabei die Lippendichtung 50 bei horizontaler Einbaulage zu belasten. Andererseits wird sichergestellt, dass aufgrund des lediglich kleinflächigen Kontakts des Halterings 60 zu den Halteköpfen 30, 32 und/oder dem Filtergehäuse 12 eine einfache, d. h. reibungsarme, Axialbeweglichkeit der Filterkartusche gegenüber dem Filtergehäuse 12 möglich ist, insbesondere um relative thermische Längenausdehnungen zu kompensieren.

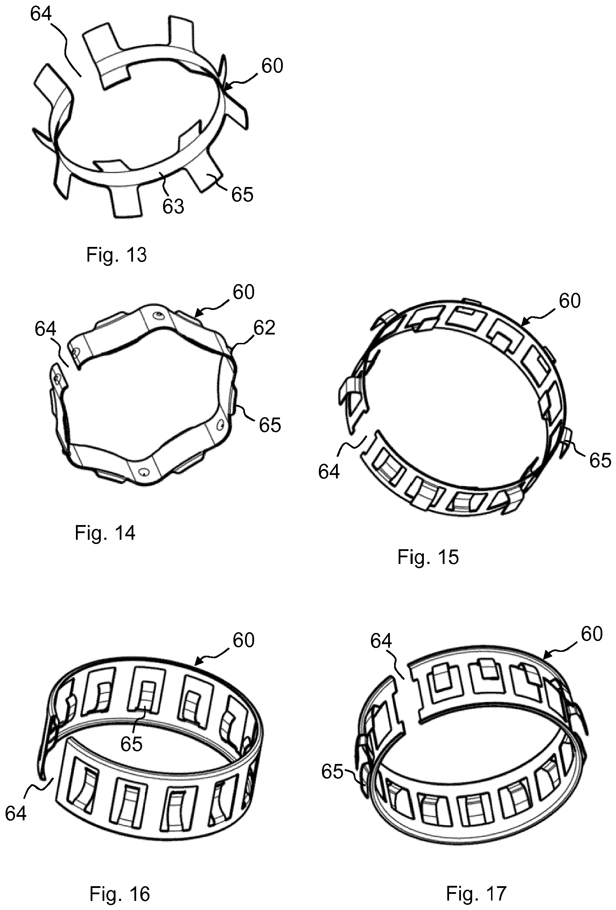

In den Fig. **13 - 17** sind einige weitere Ausführungsformen von Halteringen 60 gezeigt, die als Federringe aus Metall ausgebildet sind. Diese weisen jeweils eine vollständige Schlitzung 64 auf, was sowohl für eine einfache Montierbarkeit als auch für eine einfache und kostengünstige Herstellung Vorteile bietet; ferner ist dadurch eine Durchmesserkompensation in einem möglichst großen Durchmesserbereich erreichbar. Die Federringe können aus einem Bandmaterial hergestellt werden, wobei die Halteausbuchtungen, die hier in Form von Federzungen 65 vorliegen, durch Ausstanzen und Umbiegen erhalten werden. Die Federzungen 65 können sich je nach Ausführungsform nach radial innen und/oder radial außen erstrecken, wobei auch Kombinationen möglich sind. In der Ausführungsform des Halterings der Fig. 13b, der dem im Zusammenbau der Fig. 10 gezeigten entspricht, sind zudem radial nach außen gerichtete Abstützstifte 62 vorgesehen, die jeweils in Verbindungsabschnitten zwischen nach innen ausgewölbten Abschnitten des Halterings 60 vorliegen.

## Patentansprüche

1. Fluidfilter (10), insbesondere thermisch sterilisierbarer Fluidfilter (10), zur Aufreinigung von in einem Fluid (F) enthaltenen Stoffen, insbesondere im Wege einer Mikro-, Nano- oder Ultrafiltration des Fluids,
- mit einem Filtergehäuse (12), das einen Fluideinlass (18), einen Retentatauslass (20) sowie einen Permeatauslass (22) aufweist,
- mit einer im Filtergehäuse (12) angeordneten Filterkartusche (24), die sich in einer zur Längsachse (A) des Filtergehäuses (12) axialen Richtung erstreckt und welche ein Filtermedium (26) aufweist; und
- mit zumindest einem, vorzugsweise gummielastisch verformbaren, Dichtring (40, 42, 52), der an der Filterkartusche (24) in radialer Richtung umlaufend dichtend anliegt und mittels den die Filterkartusche (24) mit axialem Spiel am Filtergehäuse (12) gehalten angeordnet ist,
- wobei durch den Dichtring (40, 42, 52) ein mit dem Fluid (F) druckbeaufschlagbarer Überdruckbereich des Fluidfilters (10) gegenüber einem Permeatsammelraum (34) abgedichtet ist, der die Filterkartusche (24) in radialer Richtung außenseitig, bevorzugt ringförmig, umgreift und/oder der die Filterkartusche (24) durchgreift,
- und wobei der zumindest eine Dichtring (40, 42, 52), insbesondere ein dem Fluideinlass (18) zugeordneter Dichtring (40, 42, 52), eine Dichtlippe (50) aufweist, die vom Fluid (F) druckproportional zu einem im Überdruckbereich des Fluidfilters (10) herrschenden Betriebsdruck des Fluids (F) gegen die Filterkartusche (24) pressbar ist, **dadurch gekennzeichnet, dass**
zu dem Dichtring (40, 42, 52) benachbart, ein Haltering (60) radial zwischen dem Filtergehäuse (12) und der Filterkartusche (24) angeordnet ist, wobei der Haltering (60) über seinen Umfang verteilt eine Mehrzahl Halteausbuchtungen (61) aufweist, die sich von einem ersten Radius auf einen zweiten Radius erstrecken, wobei der Haltering dazu ausgebildet ist, sich radial innen in einem Haltebereich an einer Außenmantelfläche der Filterkartusche (24) abzustützen und radial außen an dem Filtergehäuse (12) anzuliegen,

2. Fluidfilter nach Anspruch 1, **dadurch gekennzeichnet, dass** das Filtermedium (26) ein keramisches Material und/oder ein keramisches Verbundmaterial aufweist.

3. Fluidfilter nach Anspruch 1 oder 2, **dadurch gekennzeichnet, dass**
- der Haltering (60) aus einem Kunststoffmaterial, insbesondere aus einem Elastomer, oder aus Metall ausgebildet ist und/oder
- die Halteausbuchtungen (61) Noppen, Nasen oder Zungen, insbesondere Federzungen, sind und/oder
- die Halteausbuchtungen (61) sich nach radial innen bis auf einen Innenumfang erstrecken, dessen Durchmesser in einem unverpressten Nichtmontagezustand gleich oder größer ist als ein Durchmesser der Filterkartusche (24) in dem Haltebereich oder
- die Halteausbuchtungen (61) sich nach radial innen bis auf einen Innenumfang erstrecken, dessen Durchmesser in einem unverpressten Nichtmontagezustand gleich oder kleiner ist als ein Durchmesser der Filterkartusche (24) in dem Haltebereich.

4. Fluidfilter nach Anspruch 3, **dadurch gekennzeichnet, dass** der Haltering (60) als metallischer Federring ausgebildet ist, dessen Halteausbuchtungen (61) bevorzugt als Federzungen (65) ausgebildet sind und der besonders bevorzugt eine Schlitzung (64) aufweist, am meisten bevorzugt eine vollständige Schlitzung derart, dass dieser einen offenen Querschnitt aufweist,

5. Fluidfilter nach einem der Ansprüche 1 bis 4, **dadurch gekennzeichnet, dass** radial zwischen der Filterkartusche (24) und dem Filtergehäuse (12) in dem Bereich, in dem der Dichtring (40, 42, 52) dichtend an der Filterkartusche (24) anliegt, ein Ringspalt vorliegt, der bevorzugt eine Weite (s) von zumindest 0,4 mm, besonders bevorzugt zumindest 0,8 mm, am meisten bevorzugt zumindest 1,5 mm, aufweist.

6. Fluidfilter nach einem der vorhergehenden Ansprüche, **dadurch gekennzeichnet, dass** der Fluidfilter zumindest einen zweiten Dichtring (40, 42, 52) aufweist, der an der Filterkartusche (24) in radialer Richtung umlaufend dichtend anliegt und über den die Filterkartusche (24) am Filtergehäuse (12) gehalten angeordnet ist.

7. Fluidfilter nach einem der vorhergehenden Ansprüche, **dadurch gekennzeichnet, dass** das Filtergehäuse (12) mehrteilig ausgeführt ist und vorzugsweise ein hülsen- oder topfförmiges Gehäuseteil mit einer ersten stirnseitigen Gehäuseöffnung aufweist, wobei vorzugsweise an der Gehäuseöffnung ein Deckel (14, 16) angeordnet ist.

8. Fluidfilter nach Anspruch 6, **dadurch gekennzeichnet, dass** das Gehäuseteil hülsenförmig ausgeführt ist und beidenends eine stirnseitige Gehäuseöffnung aufweist, wobei an jeder der beiden Gehäuseöffnungen ein Deckel (14, 16) angeordnet ist.

9. Fluidfilter nach Anspruch 7 oder 8, **dadurch gekennzeichnet, dass**
- zumindest einer der beiden Dichtringe (40, 42, 52) abschnittsweise zwischen dem Gehäuseteil und einem der Deckel (14, 16) angeordnet ist und am Deckel (14, 16) sowie am Gehäuseteil in axialer und/oder in radialer Richtung dichtend anliegt und/oder
- der Haltering zumindest abschnittsweise zwischen dem Gehäuseteil und einem der Deckel (14, 16) angeordnet ist und am Deckel (14, 16) sowie am Gehäuseteil in axialer und/oder in radialer Richtung dichtend anliegt.

10. Fluidfilter nach einem der Ansprüche 7 bis 9, **dadurch gekennzeichnet, dass** ein dritter Dichtring (40, 42, 52) zwischen dem Gehäuseteil und einem Deckel (14, 16), vorzugsweise ein dem Fluideinlass zugeordneter Deckel (14, 16), axial dichtend angeordnet ist.

11. Fluidfilter nach einem der vorhergehenden Ansprüche, **dadurch gekennzeichnet, dass** eine Basis des Halterings (60) als O-Ring ausgebildet ist.

12. Fluidfilter nach einem der vorhergehenden Ansprüche, **dadurch gekennzeichnet, dass** die Filterkartusche (24) ein Hohlfaserbündel (28) umfasst.

13. Fluidfilter nach Anspruch 12, **dadurch gekennzeichnet, dass** das Hohlfaserbündel (28) wenigstens einenends, bevorzugt beidenends, an oder in einem Haltekopf (30, 32) fixiert ist, wobei der vorzugsweise gummielastisch verformbare Dichtring (40, 42, 52) an dem Haltekopf (30, 32) in radialer Richtung umlaufend dichtend anliegt und ein axiales Spiel des Haltekopfs (30, 32) gegenüber dem Filtergehäuse (12) ermöglicht und wobei bevorzugt der Haltebereich, in dem der Haltering (60) mit seinen Ausbuchtungen (61) an der Filterkartusche (24) anliegt, an dem Haltekopf (30, 32) vorliegt.

14. Fluidfilter nach einem der Ansprüche 13 oder 14, **dadurch gekennzeichnet, dass** wenigstens ein Haltekopf (30, 32) den Permeatsammelraum (24) gegen den Fluideinlass (18) und/oder gegen den Retentatauslass (20) abdichtet.

15. Verwendung eines Fluidfilters (10) nach einem der vorhergehenden Ansprüche zum Aufkonzentrieren eines pharmazeutischen Vor- und/oder Zwischenprodukts, insbesondere eines Impfstoffs, in einem Fluid (F), zur Verarbeitung von Lebensmitteln und/oder zur Herstellung von Life Science Produkten.

## Claims

1. A fluid filter (10), in particular a thermally sterilizable fluid filter (10), for purifying substances contained in a fluid (F), in particular through microfiltration, nanofiltration or ultrafiltration of the fluid,
- with a filter housing (12) which features a fluid inlet (18), a retentate outlet (20) and a permeate outlet (22);
- with a filter cartridge (24) disposed in the filter housing (12) and extending in the axial direction with respect to the longitudinal axis (A) of the filter housing (12) and which features a filter medium (28); and
- with at least one, preferably rubber-elastic, deformable gasket (40, 42, 52), which rests against the filter cartridge (24) in the radial direction in a circumferentially sealing manner and by means of which the filter cartridge (24) is disposed so as to be retained on the filter housing (12) with axial play,
- wherein an overpressure area of the fluid filter (10) that can be pressurized with the fluid (F) is sealed with respect to a permeate collection chamber (34) using the gasket (40, 42, 52), said permeate collection chamber engaging around the filter cartridge (24) in the radial direction on the exterior side, preferably in a ring-shaped manner, and/or which passes through the filter cartridge (24),
- and wherein the at least one gasket (40, 42, 52), in particular a gasket (40, 42, 52) allocated to the fluid inlet (18), features a sealing lip (50) which can be pressed against the filter cartridge (24) by the fluid (F) in proportion to the pressure to an operating pressure of the fluid (F) prevailing in the overpressure range of the fluid filter (10), **characterized in that**
a retaining ring (60) is disposed radially between the filter housing (12) and the filter cartridge (24) adjacent to the gasket (40, 42, 52), wherein the retaining ring (60) features a plurality of retaining bulges (61) extending from a first radius to a second radius, wherein the retaining ring is designed to rest against the outside surface of the filter cartridge (24) radially inside in a retaining area and to rest against the filter housing (12) radially outside.

2. The fluid filter according to claim 1, **characterized in that** the filter medium (26) features a ceramic material and/or a ceramic composite material.

3. The fluid filter according to claim 1 or 2, **characterized in that**
- the retaining ring (60) is made of a plastic material, in particular from an elastomer, or from metal, and/or
- the retaining bulges (61) are knobs, lugs or tongues, in particular spring tongues, and/or
- the retaining bulges (61) extend radially inwards up to an inner circumference, the diameter of which is in a non-pressed, non-assembled state equal to or greater than a diameter of the filter cartridge (24) in the retaining area, or
- the retaining bulges (61) extend radially inwards up to an inner circumference, the diameter of which is in a non-pressed, non-assembled state equal to or smaller than a diameter of the filter cartridge (24) in the retaining area.

4. The fluid filter according to claim 3, **characterized in that** the retaining ring (60) is designed as a metallic spring ring, the retaining bulges (61) of which are preferably designed as spring tongues (65) and which is particularly preferably provided with a slot (64), most preferably a complete slot, such that it has an open cross section.

5. The fluid filter according to one of the claims 1 to 4, **characterized in that** radially between the filter cartridge (24) and the filter housing (12), in the region in which the gasket (40, 42, 52) is in sealing contact with the filter cartridge (24), an annular gap is present which preferably features a width (s) of at least 0.4 mm, particularly preferably at least 0.8 mm, most preferably at least 1.5 mm.

6. The fluid filter according to one of the preceding claims, **characterized in that** the fluid filter features at least a second gasket (40, 42, 52) which rests on the filter cartridge (24) in a radially encircling sealing manner and via which the filter cartridge (24) is held on the filter housing (12).

7. The fluid filter according to one of the preceding claims, **characterized in that** the filter housing (12) is of a multi-part design and preferably features a sleeve- or pot-shaped housing component with a first front-face housing opening, wherein a cover (14, 16) preferably is disposed on the housing opening.

8. The fluid filter according to claim 6, **characterized in that** the housing component has a sleeve-shaped design and features a housing opening on the front face at both ends, wherein a cover (14, 16) is disposed on each of the two housing openings.

9. The fluid filter according to claim 7 or 8, **characterized in that**
- at least one of the two gaskets (40, 42, 52) is disposed section-wise between the housing component and one of the covers (14, 16) and rests against the cover (14, 16) and the housing component in the axial and/or radial direction in a sealing manner, and/or
- the retaining ring is disposed at least section-wise between the housing component and one of the covers (14, 16) and rests against the cover (14, 16) and the housing component in the axial and/or radial direction in a sealing manner.

10. The fluid filter according to one of the claims 7 to 9, **characterized in that** a third gasket (40, 42, 52) is sealingly disposed in the axial direction between the housing component and a cover (14, 16), preferably a cover (14, 16) associated with the fluid inlet.

11. The fluid filter according to one of the preceding claims, **characterized in that** a base of the holding ring (60) is designed as an O-ring.

12. The fluid filter according to one of the preceding claims, **characterized in that** the filter cartridge (24) comprises a hollow fiber bundle (28).

13. The fluid filter according to claim 12, **characterized in that** the hollow fiber bundle (28) is fixed at least at one end, preferably at both ends, on or in a holding head (30, 32), wherein the preferably rubber-elastic deformable gasket (40, 42, 52) rests against the holding head (30, 32) in the radial direction in a circumferentially sealing manner and enables an axial play of the holding head (30, 32) with respect to the filter housing (12) and wherein preferably the retaining area, in which the holding ring (60) rests against the filter cartridge (24) with its bulges (61), is present on the holding head (30, 32).

14. The fluid filter according to one of the claims 13 or 14, **characterized in that** at least one holding head (30, 32) seals the permeate collecting chamber (24) with respect to the fluid inlet (18) and/or with respect to the retentate outlet (20).

15. A use of a fluid filter (10) according to one of the preceding claims for concentrating a pharmaceutical preliminary and/or intermediary product, in particular a vaccine, in a fluid (F), for processing food and/or for producing life science products.

## Revendications

1. Filtre à fluide (10), notamment filtre à fluide (10) stérilisable thermiquement, pour purifier des substances contenues dans un fluide (F), notamment dans le cadre d'une microfiltration, d'une nanofiltration ou d'une ultrafiltration du fluide,
- avec un boîtier de filtre (12) présentant une entrée de fluide (18), une sortie de rétentat (20) ainsi qu'une sortie de perméat (22);
- avec une cartouche filtrante (24) disposée dans le boîtier de filtre (12) et qui s'étend dans une direction axiale par rapport à l'axe longitudinal (A) du boîtier de filtre (12) et qui présente un milieu filtrant (28); et
- avec au moins une bague d'étanchéité (40, 42, 52), de préférence élastiquement malléable, qui repose de manière étanche et circonférentielle sur la cartouche filtrante (24) dans la direction radiale et au moyen de laquelle la cartouche filtrante (24) est maintenue avec un jeu axial sur le boîtier de filtre (12),
- dans lequel une zone de surpression du filtre à fluide (10) pouvant être soumise à la pression du fluide (F) est étanchée par la bague d'étanchéité (40, 42, 52) contre une chambre collectrice de perméat (34), qui entoure la cartouche filtrante (24) dans le sens radial sur le côté extérieur, de préférence de manière annulaire, et/ou qui traverse la cartouche filtrante (24),
- et dans lequel l'au moins une bague d'étanchéité (40, 42, 52), notamment une bague d'étanchéité (40, 42, 52) attribuée à l'entrée de fluide (18), présente une lèvre d'étanchéité (50) qui peut être pressée contre la cartouche filtrante (24) par le fluide (F) proportionnellement à la pression à une pression de service du fluide (F) régnant dans la zone de surpression du filtre à fluide (10), **caractérisé en ce qu'**
une bague de retenue (60) est disposée radialement entre le boîtier de filtre (12) et la cartouche filtrante (24) au voisinage de la bague d'étanchéité (40, 42, 52), dans lequel la bague de retenue (60) présente une pluralité de bosses de retenue (61) réparties sur sa circonférence, qui s'étendent d'un premier rayon à un deuxième rayon, dans lequel la bague de retenue étant réalisée de manière à s'appuyer radialement à l'intérieur dans une zone de retenue sur une surface d'enveloppe extérieure de la cartouche filtrante (24) et à reposer radialement à l'extérieur sur le boîtier de filtre (12).

2. Filtre à fluide selon la revendication 1, **caractérisé en ce que** le milieu filtrant (26) présente un matériau céramique et/ou un matériau composite céramique.

3. Filtre à fluide selon la revendication 1 ou 2, **caractérisé en ce que**
- la bague de retenue (60) est réalisée en un matériau plastique, notamment en un élastomère, ou en métal, et/ou
- les bosses de retenue (61) sont des picots, des ergots ou des languettes, notamment des languettes élastiques, et/ou
- les bosses de retenue (61) s'étendent radialement vers l'intérieur jusqu'à une circonférence intérieure dont le diamètre, dans un état non comprimé et non monté, est égal ou supérieur à un diamètre de la cartouche filtrante (24) dans la zone de retenue ou
- les bosses de retenue (61) s'étendent radialement vers l'intérieur jusqu'à une circonférence intérieure dont le diamètre, dans un état non comprimé et non monté, est égal ou inférieur à un diamètre de la cartouche filtrante (24) dans la zone de retenue.

4. Filtre à fluide selon la revendication 3, **caractérisé en ce que** la bague de retenue (60) est réalisée sous la forme d'une bague élastique métallique dont les bosses de retenue (61) sont de préférence présentées comme des languettes élastiques (65) et qui présente de façon particulièrement préférée une fente (64), de préférence une fente complète de sorte que celle-ci présente une section transversale ouverte.

5. Filtre à fluide selon l'une quelconque des revendications 1 à 4, **caractérisé en ce qu'il** se trouve radialement entre la cartouche filtrante (24) et le boîtier de filtre (12), dans la zone dans laquelle la bague d'étanchéité (40, 42, 52) repose de manière étanche sur la cartouche filtrante (24), une fente annulaire qui présente de préférence une largeur (s) d'au moins 0,4 mm, de façon particulièrement préférée d'au moins 0,8 mm, le plus préférablement d'au moins 1,5 mm.

6. Filtre à fluide selon l'une quelconque des revendications précédentes, **caractérisé en ce que** le filtre à fluide présente au moins une deuxième bague d'étanchéité (40, 42, 52) qui repose de manière étanche sur la cartouche filtrante (24) en sens radial et par laquelle la cartouche filtrante (24) est maintenue sur le boîtier de filtre (12).

7. Filtre à fluide selon l'une quelconque des revendications précédentes, **caractérisé en ce que** le boîtier de filtre (12) est réalisé en plusieurs parties et présente de préférence une partie de boîtier en forme de douille ou de pot avec une première ouverture de boîtier frontale, dans lequel un couvercle (14, 16) est de préférence disposé dans l'ouverture de boîtier.

8. Filtre à fluide selon la revendication 6, **caractérisé en ce que** le composant de boîtier est réalisé en forme de douille et présente aux deux extrémités une ouverture de boîtier frontale, dans lequel un couvercle (14, 16) est disposé sur chacune des deux ouvertures de boîtier.

9. Filtre à fluide selon la revendication 7 ou 8, **caractérisé en ce qu'**
- au moins l'une des deux bagues d'étanchéité (40, 42, 52) est disposée par sections entre le composant de boîtier et l'un des couvercles (14, 16) et repose de manière étanche sur le couvercle (14, 16) ainsi que sur le composant de boîtier dans le sens axial et/ou dans le sens radial et/ou
- la bague de retenue est disposée au moins par sections entre le composant de boîtier et l'un des couvercles (14, 16) et repose de manière étanche sur le couvercle (14, 16) ainsi que sur le composant de boîtier dans le sens axial et/ou dans le sens radial.

10. Filtre à fluide selon l'une quelconque des revendications 7 à 9, **caractérisé en ce qu'**une troisième bague d'étanchéité (40, 42, 52) est disposée de manière étanche axialement entre le composant de boîtier et un couvercle (14, 16), de préférence un couvercle (14, 16) attribué à l'entrée de fluide.

11. Filtre à fluide selon l'une quelconque des revendications précédentes, **caractérisé en ce qu'**une base de la bague de retenue (60) est réalisée en tant que joint torique.

12. Filtre à fluide selon l'une quelconque des revendications précédentes, **caractérisé en ce que** la cartouche filtrante (24) comprend un faisceau de fibres creuses (28).

13. Filtre à fluide selon la revendication 12, **caractérisé en ce que** le faisceau de fibres creuses (28) est fixé au moins à une extrémité, de préférence aux deux extrémités, sur ou dans une tête de retenue (30, 32), dans lequel la bague d'étanchéité (40, 42, 52), de préférence malléable par élasticité du caoutchouc, repose de manière étanche et circonférentielle dans le sens radial sur la tête de retenue (30, 32) et permet un jeu axial de la tête de retenue (30, 32) par rapport au boîtier de filtre (12), et dans lequel, de préférence, la zone de retenue dans laquelle la bague de retenue (60) repose avec ses renflements (61) contre la cartouche filtrante (24) se trouve sur la tête de retenue (30, 32).

14. Filtre à fluide selon l'une quelconque des revendications 13 ou 14, **caractérisé en ce qu'**au moins une tête de retenue (30, 32) étanche la chambre collectrice de perméat (24) par rapport à l'entrée de fluide (18) et/ou à la sortie de rétentat (20).

15. Utilisation d'un filtre à fluide (10) selon l'une quelconque des revendications précédentes pour concentrer un précurseur et/ou un intermédiaire pharmaceutique, notamment un vaccin, dans un fluide (F), pour la transformation de produits alimentaires et/ou la fabrication de produits pour les sciences de la vie.
